# EUROPEAN PATENT SPECIFICATION

(11) **EP 2 600 364 B1**
(45) Date of publication and mention of the grant of the patent: **17.09.2014**
(21) Application number: 11425293.5
(22) Date of filing: 02.12.2011
(51) Int. Cl.: H01G 9/20

(54) **Grätzel type solar cell with continuous organic dye and electrolyte refilling system**
Grätzel-Solarzelle mit einem kontinuierlichem Auffüllsystem für den organischen Farbstoff und Elektrolyten
Cellule solaire de type Grätzel avec un système continu de remplissage de colorant organique et d'électrolyte

(43) Date of publication of application: 05.06.2013
(73) Proprietor: Universita'del Salento, 73100 Lecce (IT)
(72) Inventor: Laforgia, Domenico, 70122 Bari (IT); Milanese, Marco, 73010 Arnesano (LE) (IT); De Risi, Arturo, 73100 Lecce (IT)
(74) Representative: Bruni, Giovanni

(56) References cited:
- WO-A1-2011/009385
- KR-A- 20100 008 068
- US-A1- 2006 249 201
- WOLFBAUER G ET AL: "A channel flow cell system specifically designed to test the efficiency of redox shuttles in dye sensitized solar cells", SOLAR ENERGY MATERIALS AND SOLAR CELLS, ELSEVIER SCIENCE PUBLISHERS, AMSTERDAM, NL, vol. 70, no. 1, 1 December 2001 (2001-12-01), pages 85-101, XP004298833, ISSN: 0927-0248, DOI: 10.1016/S0927-0248(00)00413-X

## Description

Object of the present invention is the development of a new Graetzel cell (or DSSC: dye-sensitized solar cell) provided with a refilling system both for the electrolyte dye and the organic dye (or dye).

The Graeztel cell is a device known in the state of the art, since it is a device which produces electric energy by converting light energy in the same way as the photosynthesis. In this device, in fact, an organic pigment (as the chlorophyll or other dye molecules) is excited by solar light to generate a current of electrons. In its simplest configuration, the DSSC solar cell has a "sandwich" structure, in which two conductor slides, acting as electrodes, are separated by a TiO₂ layer, from the active material (organic dye or dye) and from the electrolyte solution. Said structure is usually assembled industrially and the "sandwich" thus obtained is sealed after introducing the organic dye and the electrolyte solution. As a consequence, the technical working life of the DSSC solar cells thus obtained depends strongly on the deterioration level over time both of the organic dye and the electrolyte solution.

The International Patent Application WO2010005213 relates to an organic dye for DSSC cells and its method of production, as well as an injection device of the electrolyte in the cell and its respective method of production. Aim of said International Patent Application is to provide the DSSC cells with sub-modules containing the dye, arranged side by side with the interposition of a film module through which there occurs the refilling and the regeneration of the electrolyte in the cell. In this way, it is possible to reduce the number of the holes to be provided in the cell for the electrolyte injection, thus minimizing the risks of loss and, at the same time, to guarantee a stable level of the electrolyte inside the cell, thus stabilizing its effectiveness.

In the International Patent Application WO2011009385, instead, it is described a nanofluid mechanics system by means of which the mean life of a DSSC cell is intended to be prolonged, by regenerating only the electrolyte intake and carrying out a looped flow of the same electrolyte.

The US Patent Application US2004112422 describes a traditional solar cell provided with nano-channels obtained on a semiconductor layer, applied on one of the electrodes, in order to optimize the electrolyte path inside the semiconductor layer, after the same electrolyte has been injected and the cell sealed.

The main disadvantage of the DSSC cells known at the state of the art is, therefore, the rapid deterioration both of the organic dye and the electrolyte, which makes them still scarcely competitive with respect to other direct solar energy conversion systems (as for example the photovoltaic system).

Therefore, aim of the present invention is to lessen and/or overcome the problem of the reduced working life of the Graetzel cells providing a continuous refilling system of the electrolyte and the organic dye (dye), prior to their complete deterioration, together with the use of a ion exchange membrane interposed between the dye and the electrolyte solution.

In order to solve the prefixed aims, the present invention proposes to convert the solar energy directly in electric energy by using a Graetzel cell (or DSSC) provided with an electrode, made in semiconductor material, on which there are provided nanometric channels, which allow the flow, and so the continuous refilling, of the organic dye (dye) and the electrolyte, indispensable for its functioning. Both the dye and the electrolyte replenishing flows are separated by said ion exchange membrane. Said Graetzel cell is also provided with a charge and discharge system of the organic dye and electrolyte solution, made up of at least two couples of tubes connected peripherally to the cell and comprising a charge tube of the dye, a charge tube of the electrolyte, a discharge tube of the dye and a discharge tube of the electrolyte.

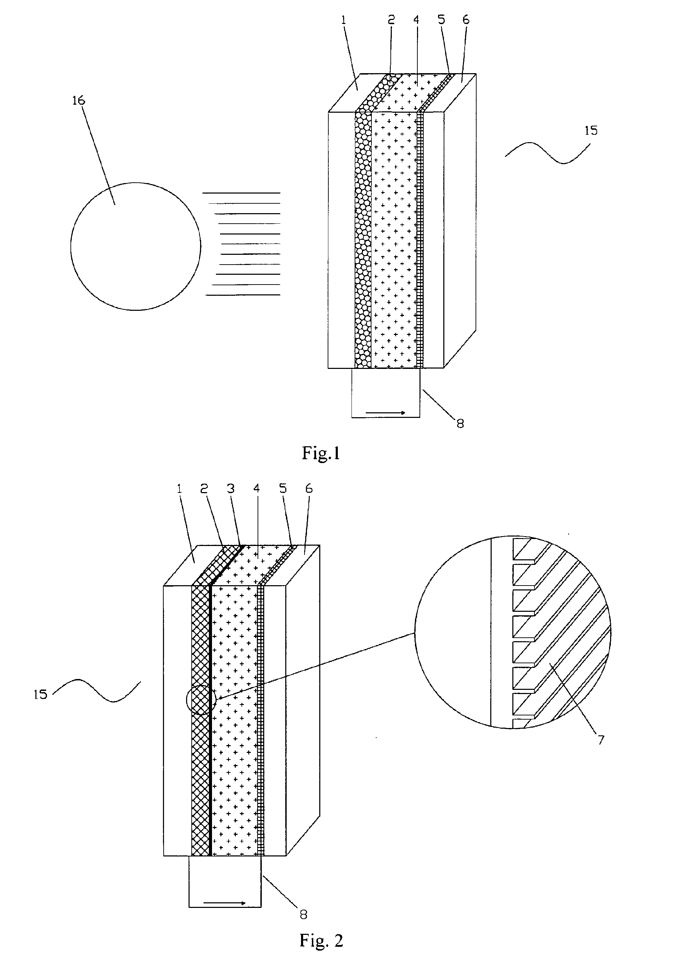

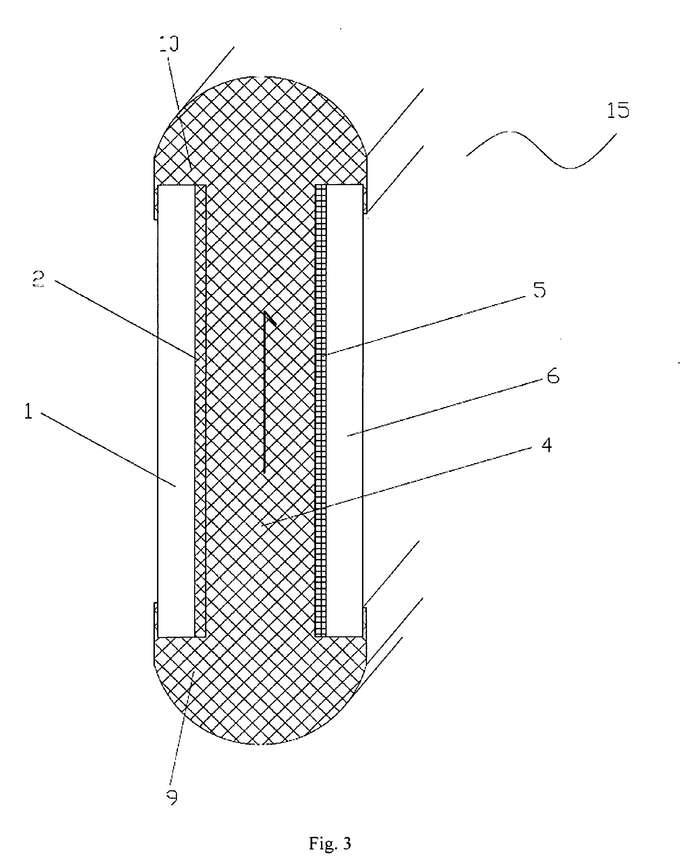

These and other advantages will be clearer by the detailed description of the present invention which refers to the following figures 1/3 to 3/3, which show a preferred, absolutely not limiting embodiment of the present invention. In particular:
- fig. 1 shows a constructive scheme of a traditional Graetzel cell in section view, with the main elements thereof;
- fig. 2 is a general scheme in section view of a possible embodiment of the device object of the present invention, with the nanometric channels provided on the semiconductor layer in detail;

- fig. 3 is an axonometric view of a preferred embodiment of the cell free of ion exchange membrane, with the refilling system of the electrolyte solution and the organic dye highlighted;
- fig. 4 is an axonometric view of an alternative embodiment of the cell comprising the ion exchange membrane, yet with the refilling system of the electrolyte and the organic dye highlighted.

In fig. 1, it is shown a basic constructive scheme of a Graetzel cell with the main elements thereof. As yet said, a Graeztel cell (or DSSC) is a device which produces electric energy by converting light energy in the same way as the photosynthesis processes. As it can be seen in fig. 1, in its simplest configuration, the DSSC solar cell is made up of a transparent glass 1 (typically F-doped conductive (Sn02:F)), covered by mesoporous Ti02 2 (typically 70% anatase of nc-Ti02 and 30% rutile) saturated with organic dye; an electrolyte 4 containing a red-ox couple (typically I-I3-); a counter-electrode 6 covered by a catalyst 5 (typically platinum or carbon). If lighted up by the sun, the cell produces the photovoltage and the respective current circulates through an outer circuit 8 connected to the electrodes 1 and 6.

In fig. 2 it is shown a possible preferred, absolutely not limiting embodiment of the invention, in which it is schematized a Graetzel cell in which on the first electrode 1 it is deposited a semiconductor layer 2, inside which the dye does not remain immobilized, as in the case of the traditional cells, but, it flows so that the continuous refilling is allowed. The semiconductor layer 2 on the electrode 1 is provided with a plurality of nanometric channels 7 which allow the flow, and, therefore, the continuous refilling of the organic dye (dye). Yet in the scheme of fig. 2, it is provided the use of a ion exchange membrane 3 interposed between the semiconductor layer 2 and the layer of the electrolyte solution 4 to favour the passage of the electrons, and therefore, the closing of the electric circuit 8, thus allowing at the same time the refilling of the electrolyte 4. A possible variant of this preferred embodiment of the cell is a cell wholly similar to the one just described and schematized in fig. 2, without using said ion exchange membrane 3, where, in this case, the dye and the electrolyte 4 are mixed in an unique solution according to suitable doses. Moreover, if needed, the semiconductor layer 2 can be shaped suitably in order to increase the contact surface with the dye. In the schematization of fig. 2, it is represented a possible embodiment of the nano-channels 7, provided in the semiconductor layer 2, in almost rectangular section and which can be obtained (in non limiting way), for example, using the rolling technology i.e. by making a a preshaped roll (acting as negative) slide on the layer to be incised (in the specific case, the semiconductor 2). The dimension of said nano-channels 7 has to be such that an efficient charge transfer between the dye molecule flowing in the channel and the semiconductor 2 (about 100nm) is allowed. As materials to be used for realizing the layer on which the channels are to be provided, it is possible to use crystals or oxides.

With the technology of the present invention, the optimal distance, for the tunnel effect between the dye and the semiconductor material, is guaranteed by the characteristic dimension of the nano-channels 7 in which the dye flows.

As yet stated, with the present invention it is intended to be provided the organic dye (dye) and electrolyte refilling, with the aim of prolonging the whole technical working life of the Gratezel cell.

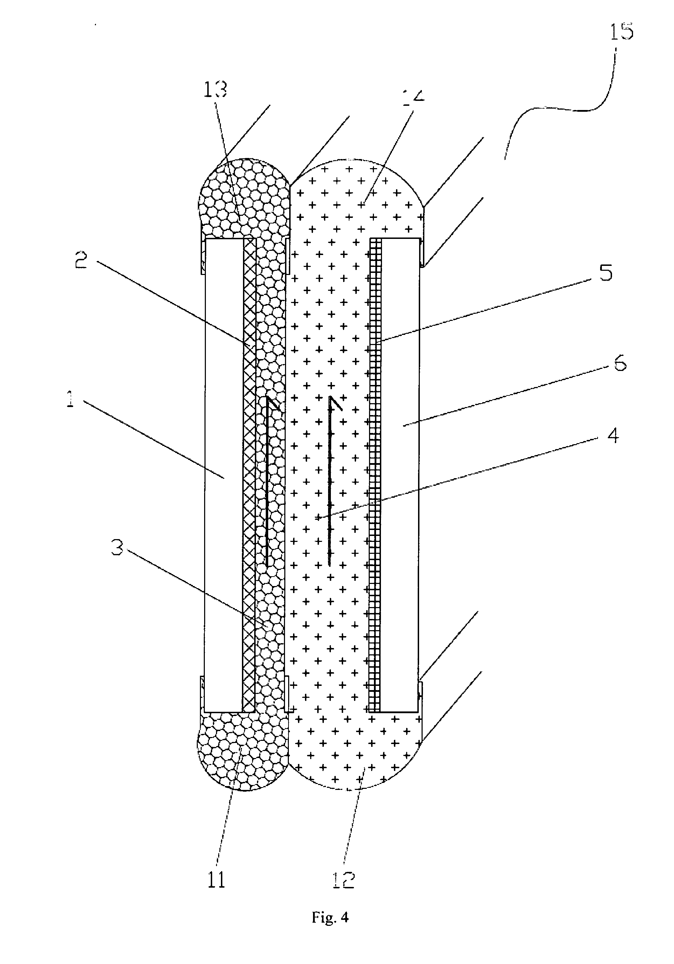

Therefore, as it is shown in the axonometric views in fig. 3 and fig. 4, the organic dye (dye) and electrolyte refilling can be obtained by at least a couple of tubes connected peripherally to the cell by glueing, welding or other technique, starting from the simplest configuration in which the dye and the electrolyte are mixed in only one solution according to suitable doses. In fig. 3, it is shown a flow scheme of the dye and electrolyte inside the Graetzel cell object of the present invention in the alternative embodiment, which is free of ion exchange membrane 3: in such a configuration the organic dye and the electrolyte solution 4 are introduced in the cell by means of a charge tube 9 and vice versa, go out from the same cell by means of a discharge tube 10. Fig. 4, instead refers to the hypothesis of introducing the ion exchange membrane 3 acting as "separator" between the organic dye flow and the one of the electrolyte solution 4, in the constructive scheme of the solar cell. In such a case, the dye and electrolyte refilling occurs by means of two couples of tubes connected peripherally to the cell by means of glueing, welding or any other technique; a charge tube of the dye 11, a charge tube of the electrolyte 12, a discharge tube of the dye 13 and a discharge tube of the electrolyte 14.

The just described system is solely a representative example of a possible embodiment of the new Graeztel cell (or DSSC cell) object of the present invention. In the previously described preferred and alternative embodiments, there have been indicated the materials commonly used for the realization of the different parts constituting the cell, but it is possible to obtain similar results with other materials, yet maintaining the principle of the organic dye and electrolyte refilling system. Similarly, the shape of the channels 7 obtained in the semiconductor layer can be various and can be obtained with any technique, provided that the principle of the organic dye and electrolyte refilling system is preserved.

## Claims

1. Dye-sensitized solar cell comprising a couple of electrodes (1) and (6), at least a semiconductor layer (2) deposited on one of said electrodes, at least an organic dye, at least a catalyst (5) deposited on the counter-electrode (6), at least an electrolyte solution (4), wherein:
- on the semiconductor layer (2) there is provided a plurality of nanometric channels (7) which allow the flow and, therefore, the continuous refilling both of the organic dye (dye) and the electrolyte solution (4);
- an ion exchange membrane (3) interposed between the semiconductor layer (2) and the layer of electrolyte solution (4) is used and
**characterized in that**
- said cell is provided with a charge and discharge system of the organic dye and electrolyte solution, made up of at least two couples of tubes connected peripherally to the cell and comprising a charge tube of the dye (11), a charge tube of the electrolyte (12), a discharge tube of the dye (13) and a discharge tube of the electrolyte (14) with the dye and the electrolyte replenishing flows being separated by said ion exchange membrane (3).

## Patentansprüche

1. Farbstoffsolarzelle, die aus einer Gruppe von Elektroden (1) und (6), mindestens einer Halbleiterschicht (2), die auf den besagten Elektroden angebracht werden, mindestens einem organischen Färbemittel, mindestens einem Katalysator (5), der auf einer Gegenelektrode (6) angebracht ist, mindestens einer Elektrolyselösung (4) besteht, in der:
- auf der Halbleiterschicht (2) eine Vielzahl nanometrischer Kanäle (7) angebracht ist, die einen Durchfluss und damit das kontinuierliche Auffüllen des organischen Färbemittels und der Elektrolytlösung (4) erlauben;
- Eine Ionen-Austauschmembran (3) zwischen der Halbleiterschicht (2) und der Schicht der Elektrolytlösung (4) verwendet wird und
dadurch charakterisiert wird, dass
- die besagte Zelle mit einem Ladungs- und Entladungssystem des organischen Färbemittels und der Elektrolytlösung ausgestattet ist, das aus mindestens zwei Röhrenpaaren besteht, die peripher an der Zelle angeschlossen sind, und aus einer Speicherröhre des Färbemittels (11), einer Speicherröhre des Elektrolyts (12), einer Entladungsröhre des Färbemittels (13) und einer Entladungsröhre des Färbemittels wobei das Lösemittel und die Elektrolyt-Nachfüllflüsse von der genannten lonen-Austauschmembran (3) getrennt werden.

## Revendications

1. Cellule solaire à colorant (ou cellule solaire à pigment photosensible) comprenant un couple d'électrodes (1) et (6), au moins une couche semi-conductrice (2) déposée sur l'une desdites électrodes, au moins un catalyseur (5) déposé sur la contre-électrode (6), au moins une solution électrolytique (4), dans laquelle :
- ont été ménagés, sur la couche semi-conductrice (2), une pluralité de canaux nanométriques (7) qui autorisent l'écoulement et, par conséquent, le remplissage continu à la fois du colorant organique (le colorant) et de la solution électrolytique (4) ;
- est utilisée une membrane échangeuse d'ions (3) interposée entre la couche semi-conductrice (2) et la couche de solution électrolytique (4), et
**caractérisée en ce que**
- ladite cellule est pourvue d'un système de charge et décharge du colorant organique et de la solution électrolytique, constitué d'au moins deux couples de tubes connectés en périphérie de la cellule et comprenant un tube de charge du colorant (11), un tube de charge de l'électrolyte (12), un tube de décharge du colorant (13) et un tube de décharge de l'électrolyte (14), les flux de remplissage du colorant et de l'électrolyte étant séparés par ladite membrane échangeuse d'ions (3).
